# EUROPEAN PATENT APPLICATION

(11) **EP 3 121 425 A1**
(43) Date of publication of application: **25.01.2017**
(21) Application number: 16174950.2
(22) Date of filing: 17.06.2016
(51) Int. Cl.: F02D 41/22, F02D 41/40, F02D 19/06, F02D 41/00

(54) **METHOD AND DEVICE FOR INSPECTING AN ELECTRONICALLY CONTROLLED INJECTION DEVICE FOR INJECTING A FUEL INTO A CYLINDER OF AN INTERNAL COMBUSTION ENGINE**

(30) Priority: 24.07.2015 EP 15178262
(71) Applicant: Winterthur Gas & Diesel AG, 8401 Winterthur (CH)
(72) Inventor: Sudwoj, Gregory, 8482 Sennhof/Winterthur (CH)
(74) Representative: Intellectual Property Services GmbH

(57) **Abstract**

A method is proposed for inspecting an electronically controlled injection device (7) for injecting a fuel into a cylinder (3) of an internal combustion engine (1), in particular a large diesel engine, having a piston (4) for reciprocating movement in the cylinder(3), and a common rail system (2) with a pressure reservoir (6) for delivering fuel to the cylinder (3), said method comprising a test cycle with the steps of:
a) sending during operation of the engine (1) a test injection command (TF) to the injection device (7) causing the injection of fuel into the cylinder (3),
wherein the test injection command (TF) begins after the ignition of the fuel in this cylinder (3) has started, and is measured such that it corresponds to a predetermined test amount of fuel to be injected, and
b) determining a pressure response of the pressure reservoir (6),
said method further comprising the step of comparing the pressure response with a reference signal for assessing the condition of the injection device (7). In addition, a large diesel engine, especially a large two-stroke diesel engine, is proposed having a control device being designed for performing this method.

## Description

The invention relates to a method for inspecting an electronically controlled injection device for injecting a fuel into a cylinder of an internal combustion engine, in particular a large two-stroke diesel engine, having a piston for reciprocating movement in the cylinder, and a common rail system with a pressure reservoir for delivering fuel to the cylinder. Furthermore, the invention relates to a large diesel engine, especially a large two-stroke diesel engine, having a control device being designed for performing this method.

Large diesel engines, which can be designed as two-stroke or four-stroke engines, for example as large two-stroke diesel engine with longitudinal scavenging, are often used as main propulsion units for ships or also in stationary operation, for example for driving large generators for the production of electrical power. Here as a rule the engines are in constant operation over a considerable period of time which makes high demands on the operating reliability and availability. For this reason, for the operators, long and predictable intervals between services, low degrees of wear and, an economical use of fuel and operating materials are central criteria for the operation of the machines.

Especially in view of the growing requirements regarding protection of the environment the operation of large diesel engines becomes more and more demanding. Large diesel engines are mostly operated with heavy oil that requires specific measures with regard to the exhaust resulting from the combustion. In view of the stronger statutory provisions regarding the limitation of exhaust a need exists now for several years for so-called dual-fuel motors. These are engines that can be operated with two different fuels. In a gas mode a gas, for example natural gas like LNG (liquefied natural gas) or another suited gas for operating an internal combustion engine is used for the combustion in the cylinders. In a liquid mode a suited liquid fuel like gasoline, diesel or heavy oil is used for the combustion in the cylinders of the same engine.

Within the scope of this application the term "large diesel engine" or the like encompasses also such large engines, which can be operated beside the diesel operation, that is characterized by the self-ignition of the fuel, also in an Otto operation, that is characterized by an external ignition, or in a mixed form of these two operations.

Modern large diesel engines are electronically controlled and usually comprise a common rail system with a pressure reservoir for supplying the fuel, e.g. heavy oil, to the cylinders. The fuel in the pressure reservoir has a pressure of several hundred bar, for example 700-900 bar, but the pressure may also be higher, even more than 1000 bar.

For each cylinder at least one, but typically two or three electronically controlled injection devices are provided being connected to the pressure reservoir for receiving pressurized fuel from there. Each injection device comprises a control unit and an injector. The injector has a spring-loaded valve member cooperating with a valve seat as well as a nozzle for injecting the fuel into the combustion chamber of the cylinder. The injector is in fluid communication with the pressure reservoir. If the valve member is lifted the pressurized fluid can pass between the valve member and the valve seat and enters the nozzle for being injected. If the valve member is pressed into the valve seat the connection to the nozzle is closed an no fuel can reach the nozzle.

The control unit of the injection device is also in fluid communication with the pressure reservoir and uses the pressurized fuel as pressure medium for keeping the valve member in a sealing contact with the valve seat. When the control unit releases the fuel pressure from the valve member the high pressure at the valve seat prevails the spring load and the fuel pressure in the control unit and thus lifts the valve member for initiating the injection of fuel into the combustion chamber. Basically, the control unit works like a switching valve. In the closed position the fuel pressure together with the spring load is used to keep the valve member in sealing contact with the valve seat and in the opened position the valve member is released from the fuel pressure, so that the higher fuel pressure in the region of the valve seat lifts the valve member from the valve seat. The switching between the positions is realized by way of an electromagnetic actuator receiving an electric signal as fuel injection command from the electronic engine control unit. As long as the fuel injection command is on a high level (switched on) injection into the combustion chamber is performed, as soon as the fuel injection command changes to low level (is switched off) the injection stops. Thus, the time length of the fuel injection command determines the amount of fuel that is injected and the beginning of the fuel injection command determines the crank angle, at which the fuel injection starts.

However, the real amount of fuel that is injected into the combustion chamber during the duration of a fuel injection command cannot be measured. Of course, there are measures known for detecting leakages or electrical problems for example with the coil moving the actuator. Furthermore, by visual impressions for example of the spray pattern of the nozzle it is possible to get some information about the actual condition of the injector device, but with respect to the relation of the length of the fuel injection command to the amount of fuel, that is really injected into the combustion chamber, on has to rely on the assumption that this relation is correct. This assumption is justified only for a limited number of operating hours. Especially those parts of the control unit of the injector device, which are in contact with the fuel, are subject to a considerable wear, even tear may occur. Most of the reasons for these degradation effects are not under the control of or not known to the operator. One example is the quality of the heavy oil that may fluctuate quite strongly. Contamination of the fuel, for example abrasive particles, or cavitation effects occurring in the control unit may cause a stronger wear.

These are the reasons why it is nowadays a common measure in a large diesel engine to replace the injection devices or parts thereof on a routine basis after a defined number of operating hours, for example after 8'000 operating hours. Of course, the defined number of operating hours is chosen as low as to make sure that the injection device is correctly working at least for this number of operating hours.

This measure has several drawbacks. Since the number of operating hours after which the injection device or parts thereof has/have to be replaced by a new one is always set with a safety margin it happens quite often, that an injection device or parts thereof are exchanged although they are still in good condition. This is uneconomic and causes additional and unnecessary costs.

On the other hand it is also possible, especially when the combustion engine has to be operated under very unfavorable conditions, for example with heavy fuel of low quality with a lot of impurities or dirt, that the time characteristic, i.e. the relation between the duration of the fuel injection command and the real amount of fuel injected into the cylinder, is deteriorated prior to reaching the standard limit for exchange. This results in an improper injection process which is adverse for an optimal, economic and low-emission operation of the combustion engine.

Thus, there is a need for a measure that enables an inspection of an injection device of an internal combustion engine, in particular a large diesel engine. The invention addresses this need.

Therefore, it is an object of the invention to propose a method for inspecting an electronically controlled injection device for injecting a fuel into a cylinder of an internal combustion engine, in particular a large diesel engine, which particularly renders possible to assess the real amount of fuel that is injected into the combustion chamber of the engine. Furthermore, it is an object of the invention to propose a large diesel engine being designed to perform such a method.

The subjects of the invention satisfying these objects are characterized by the features of the independent claim of the respective category.

In accordance with the invention a method is proposed for inspecting an electronically controlled injection device for injecting a fuel into a cylinder of an internal combustion engine, in particular a large diesel engine, having a piston for reciprocating movement in the cylinder, and a common rail system with a pressure reservoir for delivering fuel to the cylinder, said method comprising a test cycle with the steps of:
a) sending during operation of the engine a test injection command to the injection device causing the injection of fuel into the cylinder, wherein the test injection command begins after the ignition of the fuel in this cylinder has started, and is measured such that it corresponds to a predetermined test amount of fuel to be injected, and
b) determining a pressure response of the pressure reservoir, said method further comprising the step of comparing the pressure response with a reference signal for assessing the condition of the injection device.

This method enables the assessment of the condition of an injection device of an internal combustion engine, especially of a large diesel engine, during operation of the machine by measuring the pressure response of the pressure reservoir of the common rail system and analyzing this pressure response to the test injection by comparison with a reference signal. Since the geometry of the pressure reservoir and all other components of the common rail system is known as well as the actual values of the parameters like the pressure in the pressure reservoir, the length of the test injection command, the start of the test injection command it is possible to investigate whether the relationship between the length of the test injection command and the real amount of fuel that is injected into the combustion chamber is still correct. Thus, there is the possibility to assess the condition of the tested injection device during the operation of the engine. By this it is avoidable to exchange an injection device or parts thereof to early, i.e. when the wear is still within acceptable limits and no tear have yet occurred. On the other hand it can be avoided that injection devices that already show excessive wear or unacceptable tear are further used for the operation of the combustion engine. This has the additional advantage that the service for the combustion engine may be planned in a more effective manner. Degradation of the injection device which are for example caused by contamination of the fuel or by cavitation effects become detectable.

The injection of the test amount of fuel is a post-injection, meaning that the injection of the test amount starts only after the injection of the normal amount of fuel that is used for the operation of the cylinder under normal working conditions. Usually, the test amount of fuel will at most cause a negligible and temporary rise of the exhaust gas temperature.

In a preferred embodiment, the test injection command is started when the piston has passed the top dead center. When the piston passed the top dead center the working stroke of this piston already started, so that the contribution of the test amount of fuel to the acceleration of the crankshaft is even more reduced.

It is an advantageous measure, when an operational fuel injection command is frozen to a constant value during the test cycle. The operational fuel command is the normal fuel command that is used for the injection device to perform the normal operation of the combustion engine. Freezing this operational fuel injection command, that is not modifying it during the test cycle, makes the analysis of the comparison of the pressure response with the reference signal easier and even more accurate.

Since in most cases large diesel engines have more than one cylinder and each cylinder of a large diesel engine may be provided with more than one injection device, it is preferred that a specific injection device is selected from a plurality of injection devices, the test cycle is started for the specific injection device and during the test cycle the operational fuel injection commands for all injection devices are frozen to a constant value.

Furthermore, it is preferred, when the constant value corresponds to the operational fuel injection command that was used just prior to the starting of the test cycle.

It is advantageous when the test injection command is timed such that the injected test amount of fuel does not result in an essential rise of the combustion pressure. That is, the beginning of the test injection command to the injector to be tested is selected in such a way, that the injected test amount of fuel does not cause a significant rise of the combustion pressure or a significant contribution to the acceleration of the crank shaft.

In practice it is preferred, when the test injection command for the injection device is started less than four milliseconds, preferably less than two milliseconds, after the end of the operational fuel injection command. By this measure it is ensured, that the beginning of the test injection command does not fall within the dead time of the injector device after the end of the operational fuel command.

For increasing the accuracy of the inspection it is preferred, when the test injection command is longer than each operational fuel injection command under normal operation of the engine. By using such a long test injection command the pressure response of the pressure reservoir is even more pronounced.

Regarding the length of the test injection command it is preferred, when the test injection command is timed such, that the injection of the test amount of fuel is finished before a scavenging air opening of the cylinder supplied by the injection device under test is opened. By this, it can be avoided that fuel enters into the scavenging air system of the combustion engine.

Especially in those cases when the pressure response is not recorded properly or too weak for a reliable assessment it is preferred, that the test cycle comprises at least one repetition of step a) and step b) for the same injection device during consecutive working cycles of the combustion engine. It is also possible, to collect pressure responses for several steps a) and steps b) and to sum them up or analyze a mean value of the pressure responses.

It is still a further preferred measure, when all fuel pumps supplying fuel to the pressure reservoir are operated with a constant delivery rate during each test cycle. This measure may facilitate the analysis of the pressure response.

According to a preferred embodiment, the combustion engine is running at low load, in particular at most at 50% of its full load, during the test cycle. When the engine runs at low load, the operational fuel injection commands are typically shorter, thus the relative influence of the test amount of fuel on the pressure response of the pressure reservoir becomes larger. This even enhances the accuracy of inspecting the injection device.

In a preferred embodiment of the method, the reference signal is determined by means of at least one injection device in mint condition having no wear and no tear. Using a new injection device or an injection device having only negligible wear is an easy measure to establish a reliable reference signal.

Furthermore, the invention proposes a large diesel engine, especially a large two-stroke diesel engine, having at least one cylinder, a common rail system with a pressure reservoir for delivering a fuel to the cylinder, at least one electronically controlled injection device for injecting the fuel into the cylinder, and a control device being designed for performing a method according to the invention. In such a large diesel engine it is possible to inspect the condition of the injection device or the injection devices during normal operation of the engine. The control device is preferably included into the engine control unit for the diesel engine and may comprise a software module being adapted to perform a method according to the invention.

The large diesel engine according to the invention may be designed as a four-stroke engine or as a two-stroke engine, in particular a large two-stroke engine with longitudinal scavenging.

In particular, the large diesel engine according to the invention may be designed as a dual fuel engine for the combustion of a liquid fuel, preferably heavy oil, and for the combustion of a gas.

Further advantageous measures and preferred embodiments of the invention result from the dependent claims.

The invention will be explained in more detail with the help of the schematic drawings, which show
- Fig. 1:: a schematic illustration of essential parts of a common rail system of an embodiment of a large diesel engine according to the invention,
- Fig. 2:: a schematic illustration of a injector device and other components of the engine of Fig. 1, and
- Fig. 3:: an illustration of a sequence of injection commands.

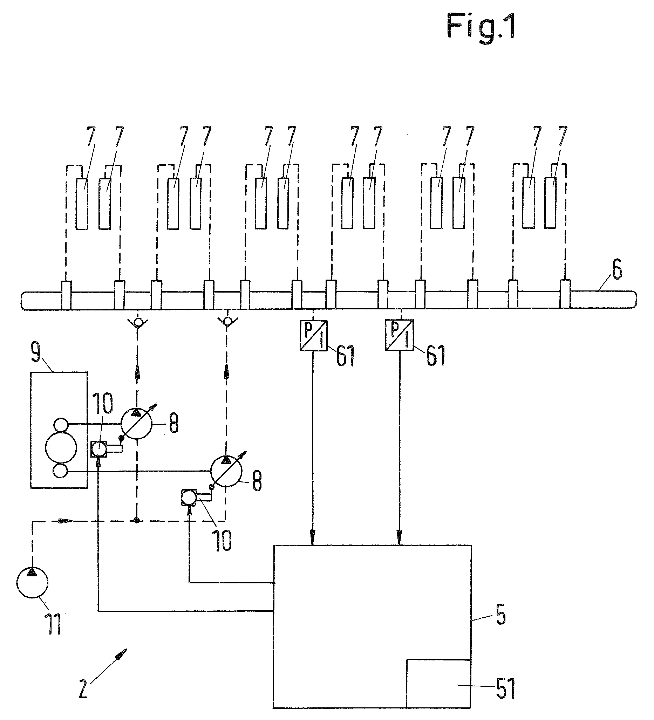

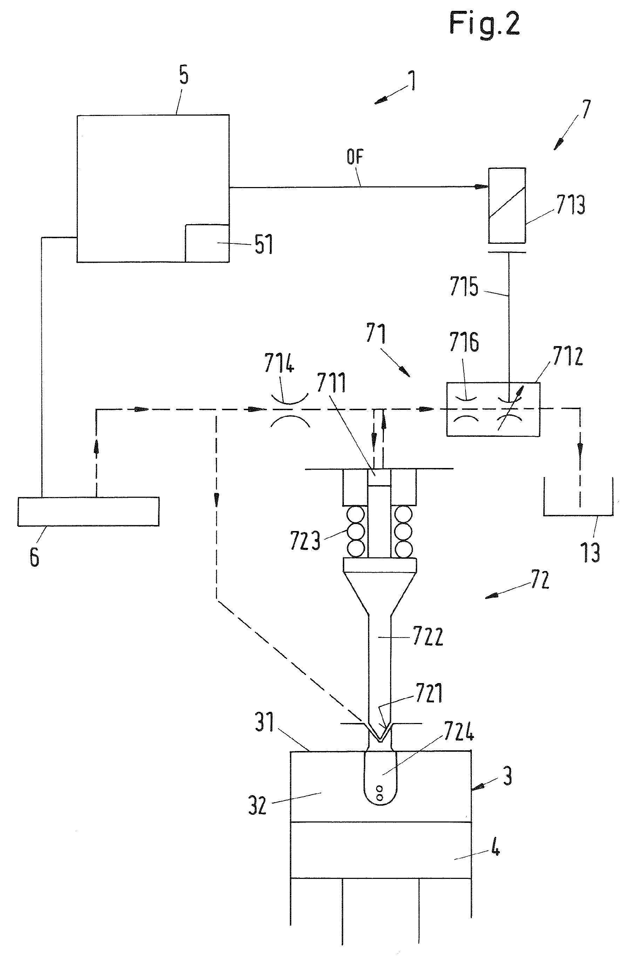

Fig. 1 shows in a schematic representation essential parts of a common rail system 2 for the fuel supply of an internal combustion machine, in particular a large diesel engine. Fig. 2 is a schematic representation of some components of a large diesel engine being designated in its entity by reference numeral 1. The large diesel engine 1 has at least one cylinder 3 but typically more, for example up to fourteen cylinders 3. Since it is sufficient for the understanding of the invention, in Fig. 1 only one cylinder 3 is shown. In the cylinder 3 a piston 4 is arranged for a reciprocating movement between a top dead center and a bottom dead center. The top side of the piston 4 and a cylinder cover 31 together with the cylindrical wall of the cylinder 3 are limiting a combustion chamber 32 in which the fuel is injected for the combustion. The exhaust valve of the cylinder is not shown in the schematic Fig. 2.

In the following description reference is made by way of example to an embodiment, wherein the internal combustion machine is designed as a large two-stroke diesel engine 1 with longitudinal scavenging. Since these large diesel engines 1 are well known in the art, there is no need for a detailed description.

Of course, the invention is not restricted to this specific type of an internal combustion machine. In particular, the internal combustion engine may be any type of large diesel engine as they are used for example as main propulsion units for ships or also in stationary operation, for example for driving large generators for the production of electrical power. The large diesel engine 1 can be designed as two-stroke or four-stroke engine. It is also possible that the large diesel engine 1 is designed as a dual fuel engine for the combustion of a liquid fuel and for the combustion of a gas, for example natural gas.

The large two-stroke diesel engine 1 is usually operated with heavy oil. The same is true for the operation of a dual fuel engine in the liquid mode. Nowadays a modern large diesel engine 1 is operated in a fully electronically controlled manner. A engine control unit 5 operates and controls all functions of the large diesel engine 1, for example the operation of the exhaust valves for the gas exchange and the injection process for the fuel, by way of electronic signals and commands. In addition the engine control unit 5 receives information from several detectors, sensors or measuring devices.

Fig. 1 shows the common rail system 2 of the large diesel engine 1 that supplies the fuel, e.g. heavy oil, to the combustion chamber 32 of the cylinders 3. The common rail system in Fig. 1 is designed for the supply of six cylinders 3, however this number is only an example.

The common rail system 2 comprises a pressure reservoir 6 also called "fuel rail" which contains the fuel to be delivered to the cylinders 3 under a high pressure that essentially corresponds to the injection pressure. One or more fuel pumps 8 - in this example two fuel pumps 8 - driven by a drive unit 9 supply the pressure reservoir with the fuel under high pressure. The pressure of the fuel in the pressure vessel has for example a value of 700-900 bar but may also be higher. A fuel booster pump 11 which is connected with a reservoir for the fuel (not shown) delivers the fuel to the fuel pumps 8.

For maintaining the pressure of the fuel in the pressure reservoir on a constant value a closed-loop control is provided. One or more pressure sensors 61 - in this example two pressure sensors 61 - measure the actual value of the pressure in the pressure reservoir 6. This value is transmitted to the engine control unit 5 as indicated in Fig. 1 by the arrows without reference numeral and compared with the set value for the pressure. Based upon this comparison the engine control unit sends a signal to flow control valves 10 with which the delivery rate of the fuel pumps 8 may be adjusted. By way of this closed-loop control the pressure of the fuel in the pressure reservoir is kept on a constant value during operation of the engine 1.

The pressure reservoir 6 is in fluid communication with a plurality of electronically controlled injection devices 7 for injecting the fuel into the combustion chamber 32 of the respective cylinder 3. There is at least one injection device 7 for each cylinder 3, however in most large diesel engines there are two or three injector devices 7 for each cylinder 3. In the embodiment shown in Fig. 1 there are two electronically controlled injection devices 7 for each cylinder 3.

The electronically controlled injection device 7 (see Fig. 2) comprises a control unit 71 and an injector 72 mounted to the cylinder cover 31 of the respective cylinder 3. The injector 72 comprises a valve member 722 cooperating with a valve seat 721 and a nozzle 724 for injecting the fuel into the combustion chamber 32. The valve member is spring loaded by a spring 723 exerting a force that presses the valve member 722 into the valve seat 724.

The pressurized fuel, as indicated by the dashed lines in Fig. 2, being supplied by the pressure reservoir 6 is fed to the injector 72 at a location upstream of the valve seat 721. Thus, as long as the valve member 722 is in sealing connection with the valve seat 721 the fuel cannot proceed to the nozzle 724.

The control unit 71 of the injector device 7 comprises a control chamber 711 which is in fluid communication with the pressure reservoir 6. An inlet throttle 714 is provided in the connection between the pressure chamber 6 and the control chamber 711. Furthermore, the control chamber 711 is in fluid communication with a switching device 712 so that the pressurized fuel can flow from the control chamber 711 to the switching unit 712. The switching unit 712 has two positions: in the opened position the fuel coming from the control chamber 711 can pass over an outlet throttle 716 through the switching device 712 and is discharged to a drain 13. In the closed position the flow-through to the drain 13 is closed and the fuel coming from the control chamber 711 cannot pass the switching unit 712. For changing from the closed to the opened position an electromagnetic actuator 713 is provided. The electromagnetic actuator comprises a rod 715 which can be moved by means of an electromagnetic coil between a position where the rod 715 closes the fluid communication to the drain 13 and a position where the rod 715 opens the fluid communication to the drain 13.

During normal operation the injection of fuel is performed in the following manner. As long as no injection is required into the respective cylinder 3 the switching unit 712 is in the closed position, i.e. the passage to the drain 13 is closed. Consequently there is a high pressure of fuel in the control chamber 711 which together with the spring load of the spring 723 presses the valve member 722 into the valve seat 721. Thus, no fuel can pass to the nozzle 724.

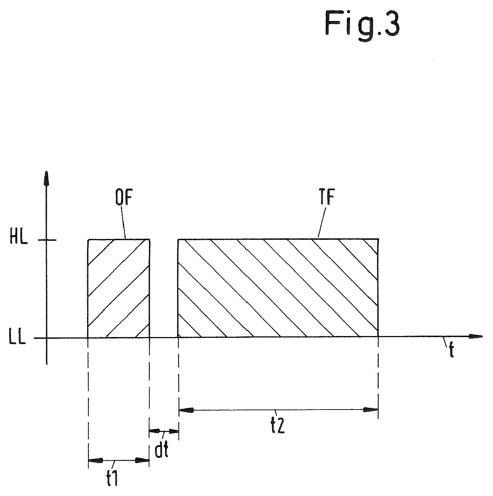

When an injection into the respective cylinder 3 is required the engine control unit 5 sends an operational fuel injection command OF to the electromagnetic actuator 713 of the injection device 7 (see also Fig. 3). By the operational fuel injection command OF the electromagnetic coil of the electromagnetic actuator 713 pulls the rod 715 into the position where the fluid communication to the drain 13 is opened. By this, the pressure of the fuel in the control chamber 711 decreases to a low value. Now, the high pressure of the fuel in the region of the valve seat 721 prevails the low pressure in the control chamber 711 and the spring load of the spring 723. Consequently, the valve member 722 is lifted from the valve seat 721. In this state the fuel can pass between the valve seat 721 and the valve member 722 to the nozzle 724 for being injected into the combustion chamber.

As soon as the operational fuel injection command is ended, i.e. the corresponding signal changes from a high level HL (Fig. 3) to a low level LL, the rod 715 is moved back to the position, in which it closes the fluid communication through the switching unit 712 to the drain 13. The pressure in the control chamber 711 increases and together with the spring load of the spring 723 prevails the pressure of the fuel at the valve seat 724. The valve member 722 is forced into sealing engagement with the valve seat 721. The injection is finished.

The beginning of the operational fuel injection command OF, i.e. the change from the low level LL to the high level HL determines the crank angle, at which the respective injection into the combustion chamber 32 begins, whereas the time length t1 of the operational fuel injection command OF determines the amount of fuel that is injected during the respective injection.

As already explained, up to now, there was no measure known to check whether the relationship between the time length t1 of the operational fuel injection command OF and the amount of fuel that is really introduced into the combustion chamber is still correct. One has simply to rely on the assumption that said relationship is correct. However, since especially the control unit 71 with the control chamber 711 undergoes wear and even tear can occur, it is desirable to inspect the relationship between the time length t1 of the operational fuel injection command OF and the amount of fuel that is really introduced into the combustion chamber 32.

According to the invention a method is proposed which is suited for inspecting the electronically controlled injection devices 7 of the large diesel engine 1 and which renders possible to check the relationship between the time length t1 of the operational fuel injection command OF and the amount of fuel that is really injected into the combustion chamber. One of the advantages of the method according to the invention is the fact that it can be performed during the operation of the engine 1. There is no need to stop the engine 1 or to dismount any components from the engine. One embodiment of this method is now explained in more detail.

In the large diesel engine a control device 51 is provided which is designed for performing the method. Preferably the control device 51 is integrated into the engine control unit 5 and comprises a software product adapted to perform the inspecting of the injection device 7.

A specific injection device 7 is selected for inspection. During normal operation of the engine 1 a test cycle is started comprising the following steps:
Step a)
   A test injection command TF (see Fig. 3) is send from the control device to the selected injection device 7. The test injection command TF causes the injection of fuel into the cylinder 3 in an analogous manner as described above. The test injection command TF begins after the ignition of the fuel that has been supplied to the cylinder 3 by the selected injection device 3 by means of the operational fuel injection command OF, has started. The time length t2 is measured such that it corresponds to a predetermined test amount of fuel to be injected.
Step b)
   a pressure response of the pressure reservoir 6 is determined.

After the test cycle the pressure response of the pressure reservoir 6 is compared with a reference signal, which is for example stored in the control device 51, and this comparison is used for assessing the condition of the selected injection device 7.

Fig. 3 shows an illustration of a sequence of the operational fuel injection command OF and a test injection command TF on a time axis t.

In step a) it is assumed for determining the time length t2 of the test injection command TF, that the relationship between the time length of an injection command and the amount of fuel that is really injected into the combustion chamber is still correct, i.e. that there is no or only negligible wear. Under this assumption the test amount of fuel is known, since the time length t2 of the test injection command TF is known. Thus, the amount of fuel that has to be delivered by the pressure reservoir 6 for performing step a) is known. In addition, the actual delivery rates of the fuel pumps 8 (frequency of rotation and amount of fuel delivery pulses), the speed of the engine 1, the geometry of the pressure reservoir 6 and all other components of the injection device 7 are known as well as the crank angle, at which the test injection command TF and therewith the injection of the test amount of fuel starts.

For determining the pressure response of the pressure reservoir 6 the pressure sensors 61 may be used. The pressure sensors 61 measure the actual values of the pressure in the pressure reservoir 6 and by monitoring these pressure values the pressure response can be determined by the temporal progress of the actual pressure values in the presser reservoir 6.

The reference signal to which the pressure response is compared may be based on model calculation, for example CFD calculation, on empirical data or historic data. Preferably, the reference signal is determined also by means of at least one injection device which is new or in mint condition, having at most a negligible amount of wear. It is possible to perform reference measurements, for example with a test engine or in a test facility, using a new, i.e. not worn injection device to receive one or more reference signals that can be stored in the control device 51 of the engine control unit.

In case the pressure response of the pressure reservoir 6 is not properly recorded in step b) or not sufficiently significant for a reliable assessment of the selected injector device, the test cycle may comprise at least one or several repetitions of step a) and step b) for the same selected injection device 7 during consecutive working cycles of the engine 1. For the comparison with the reference signal it is then possible to consider only the most significant pressure response or to collect several pressure responses and add them or to consider the mean value of several pressure responses.

As to the beginning of the test injection command TF it is preferred to select the beginning such, that the combustion of the test amount of fuel in the combustion chamber 32 of the respective cylinder 3 does not cause a significant combustion pressure rise. The combustion shall not significantly contribute to the acceleration of the crank shaft. Therefore the injection of the test amount of fuel is a post-injection that starts only after the ignition of the fuel that has been injected by the operational fuel injection command OF. The test injection command preferably starts when the piston 4 of the respective cylinder 3 just passed the top center. The combustion of the test amount of fuel only causes a temporary rise in the exhaust gas temperature.

On the other hand the injection of the test amount of fuel shall be performed such that the test amount of fuel still ignites in the combustion chamber. Therefore it is preferred, to start the test injection command TF shortly after the operational fuel injection command OF for the same injection device has been finished. This is illustrated in Fig. 3. The time distance dt between the end of the operational fuel injection command OF and the beginning of the test injection command TF is very short preferably less than four milliseconds, and even more preferred less than two milliseconds. The minimum value for the time distance dt is given by the dead time of the injector device 7 and may be for example 1.2 milliseconds.

The time length t2 of the test injection command TF is preferably much longer than the typical length of an operational fuel injection command, because the longer the test injection command TF is the greater is the test amount of fuel that has to be delivered by the pressure reservoir. Therefore a long test injection command TF usually results in a stronger pressure response which makes the analysis of the pressure response easier and more reliable. It is preferred, when the time length t2 of the test injection command TF is longer than, preferably at least twice as long as, each operational fuel injection command OF.

It is preferred when the time length t2 and the starting of the test injection command TF are timed such, that the injection of the test amount of fuel is finished before a scavenging air opening of the respective cylinder 3 is opened by the downward movement of the piston 4.

In the described preferred embodiment of the method the operational fuel injection commands OF for all injection devices 7 of each cylinder 3 - including the selected injection device 7 - are frozen to a constant value during the test cycle. That is, during the test cycle each and every injection device 7 is receiving always the same operational fuel injection command OF of the same time length t1. Of course, the starting of the respective operational fuel injection command depends on the crank angle at which the injection for the respective cylinder 3 has to be started.

The constant value to which the time length t1 of the operational fuel injection command OF is frozen during the test cycle preferably corresponds to the operational fuel injection command OF that was used just prior to the starting of the test cycle, i.e. the last operational fuel injection command before the start of the test cycle. Freezing the operational fuel injection commands OF to a constant value during the test cycle facilitates the analysis of the pressure response of the pressure reservoir 6 because the fuel command during the test cycle is known and constant. By this, the influence the fuel flow out of the pressure reservoir 6 to the injector devices 7 is eliminated from the analysis of the pressure response.

A further preferred measure is, that the engine control unit 5 operates the fuel pumps 8 such, that all fuel pumps 8 supplying fuel to the pressure reservoir 6 are operated with a constant delivery rate during each test cycle. This measure may be realized for example by deactivating the closed-loop control for the pressure in the pressure reservoir 6. Thus, since the feedback control is deactivated all fuel pumps 8 are working with a constant and frozen delivery rate during the test cycle. By this the influence the fuel flow into the pressure reservoir 6 (delivery by the fuel pump) is eliminated which facilitates the analysis of the pressure response.

As already explained the method according to the invention may be performed during operation of the engine 1. It is preferred to perform the test cycles when the combustion engine 1 is running at low load, in particular at most 30 % of its full load. When the engine is running at low load the amount of fuel delivered to the injection devices 7 is low and the operational injection commands OF are shorter. Thus, the relative influence of removing the test amounts of fuel for the test injection from the pressure reservoir 6 becomes stronger, which makes the analysis of the pressure response easier and even more reliable.

It is possible to inspect each injector device 7 of a large diesel engine by performing the method according to the invention consecutively for one injector device 7 after the other.

The method according to the invention offers operators and service personnel the possibility to inspect and to judge the condition of each injector device 7 and in particular of each control unit 71 of a injector device 7 without dismounting the injector device 7 or parts thereof from the engine 1. This can be done during normal operation of the engine 1 and without at least major disturbance to normal operation.

The method according to the invention can be part of a condition based maintenance system on all engines 1 with electronically controlled injector devices 7. The method can be offered as a computer software product, for example as an additional software feature for implementation into the engine control unit 5 because the method does not require additional hardware. Furthermore, the method according to the invention is also suited for remote condition control or remote troubleshooting.

## Claims

1. Method for inspecting an electronically controlled injection device (7) for injecting a fuel into a cylinder (3) of an internal combustion engine (1), in particular a large diesel engine, having a piston (4) for reciprocating movement in the cylinder(3), and a common rail system (2) with a pressure reservoir (6) for delivering fuel to the cylinder (3), said method comprising a test cycle with the steps of:
a) sending during operation of the engine (1) a test injection command (TF) to the injection device (7) causing the injection of fuel into the cylinder (3), wherein the test injection command (TF) begins after the ignition of the fuel in this cylinder (3) has started, and is measured such that it corresponds to a predetermined test amount of fuel to be injected, and
b) determining a pressure response of the pressure reservoir (6),
said method further comprising the step of comparing the pressure response with a reference signal for assessing the condition of the injection device (7).

2. Method in accordance with claim 1, wherein the test injection command (TF) is started when the piston (4) has passed the top dead center.

3. Method in accordance with anyone of the preceding claims, wherein an operational fuel injection command (OF) is frozen to a constant value during the test cycle.

4. Method in accordance with anyone of the preceding claims, wherein a specific injection device (7) is selected from a plurality of injection devices (7), the test cycle is started for the specific injection device (7) and during the test cycle the operational fuel injection commands (OF) for all injection devices (7) are frozen to a constant value.

5. Method in accordance with claim 3 or 4, wherein the constant value corresponds to the operational fuel injection command (OF) that was used just prior to the starting of the test cycle.

6. Method in accordance with anyone of the preceding claims, wherein the test injection command (TF) is timed such that the injected test amount of fuel does not result in an essential rise of the combustion pressure.

7. Method in accordance with anyone of the preceding claim, wherein the test injection command (TF) for the injection device (7) is started less than four milliseconds, preferably less than two milliseconds, after the end of the operational fuel injection command (OF).

8. Method in accordance with anyone of the preceding claims, wherein the test injection command (TF) is longer than each operational fuel injection command (OF) under normal operation of the engine (1).

9. Method in accordance with anyone of the preceding claims, wherein the test injection command (TF) is timed such, that the injection of the test amount of fuel is finished before a scavenging air opening of the cylinder (3) supplied by the injection device under test is opened.

10. Method in accordance with anyone of the preceding claims, wherein the test cycle comprises at least one repetition of step a) and step b) for the same injection device (7) during consecutive working cycles of the combustion engine (1).

11. Method in accordance with anyone of the preceding claims, wherein all fuel pumps (8) supplying fuel to the pressure reservoir (6) are operated with a constant delivery rate during each test cycle.

12. Method in accordance with anyone of the preceding claims, wherein the combustion engine (1) is running at low load, in particular at most at 30% of its full load, during the test cycle.

13. Method in accordance with anyone of the preceding claims, wherein the reference signal is determined by means of at least one injection device (7) in mint condition having no wear and no tear.

14. Large diesel engine, especially large two-stroke diesel engine, having at least one cylinder (3), a common rail system (2) with a pressure reservoir (6) for delivering a fuel to the cylinder (3), at least one electronically controlled injection device (7) for injecting the fuel into the cylinder (3), and a control device (51) being designed for performing a method according to anyone of the preceding claims.

15. Large diesel engine according to claim 13, designed as a dual fuel engine for the combustion of a liquid fuel, preferably heavy oil, and for the combustion of a gas.
